Europäisches Patentamt

European Patent Office

Office européen des brevets

(11) Publication number: **0 267 700 B1**

(12) EUROPEAN PATENT SPECIFICATION

(45) Date of publication of patent specification: **02.01.92** (51) Int. Cl.⁵: **A01D 43/00**, A01D 45/02

(21) Application number: **87309211.8**

(22) Date of filing: **19.10.87**

(54) **A corn harvester.**

(30) Priority: **22.10.86 DK 5060/86**
**15.04.87 DK 1961/87**

(43) Date of publication of application:
**18.05.88 Bulletin 88/20**

(45) Publication of the grant of the patent:
**02.01.92 Bulletin 92/01**

(84) Designated Contracting States:
**AT BE CH DE ES FR GB GR IT LI LU NL SE**

(56) References cited:
**EP-A- 0 099 527**
**GB-A- 2 033 715**
**US-A- 3 126 691**
**US-A- 4 087 954**

(73) Proprietor: **MASKINFABRIKEN TAARUP A/S**

**DK-5300 Kerteminde(DK)**

(72) Inventor: **Riis, Arne**
**Rynkeby Bygade 10**
**DK-5350 Rynkeby(DK)**
Inventor: **Larsen, Borge**
**Kystvej 29**
**DK-5300 Kerteminde(DK)**

(74) Representative: **Jones, Michael Raymond et al**
**HASELTINE LAKE & CO. Hazlitt House 28**
**Southampton Buildings Chancery Lane**
**London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a corn harvester of the type stated in the introductory portion of claim 1. In the known corn harvesters of this type, more or less complicated measures have been taken to ensure that the cut corn stems are supplied to the worm conveyor with the root end forwardly and preferably in a substantially upright position in order for the stems to be moved through the machine as properly and regularly as possible and in order for the chopper assembly to have the best possible working conditions.

One known corn harvester of the type referred to is disclosed in EP 0 099 527 A3. In this harvester the transport means are constituted partly by the carrier discs, which in connection with guide rails convey the material to a discharge roll, from which feed rolls carry the material to the chopper. In one embodiment the cutter disc is rotated with a substantially higher speed than the carrier discs.Particularly in case of a large working width requiring a plurality of cutter assemblies the path of travelling of the material from the outermost cutter assembly or assemblies will be rather long and curved causing a correspondingly high risk of blocking up of said paths.

The object of the invention is to provide simple means for providing a steady flow without any tendency of blocking of the flow of material through the machine.

This object is achieved in that the corn harvester is constructed as stated in the characterizing portion of claim 1 since the position of the worm or worms with respect to the carrier discs and the inlet channels in this structure ensures that all the material advanced by the carrier discs through the inlet channels is removed at the outlet ends of the channels by the worms, which act as strippers and immediately convey the material further on.

Constructional details advantageous in practice are defined in claims 3 and 4.

In the structure defined in claim 5, the cut corn stems are caused to move with the rood end forward onto and up the chute until they contact the conveyor worm. The chute prevents dropping of stems and altogether provides such a restriction of the stem motion that the stem transport will proceed steadily and properly.

The rotating cutters effectively cut all stems which engage the teeth of the carrier discs, and the embodiment defined in claim 6 ensures that the stems are cut at the counter cutter at the latest. The edge flange defined in claim 7 ensures that the material is directed inwardly below the worm instead of possibly continuing the movement round along the carrier disc. Another expedient feature is stated in claim 8.

Situations may occur where the stems after having been cut slide out of the teeth of the carrier disc. This is prevented by the feature defined in claim 9.

To avoid cut, tumbling stems from sliding into the cutter rotor, the corn harvester may be constructed as stated in claim 10. The plant portions cut off may be removed from the cutter rotor by such a finger as is stated in claim 11.

A too high travelling speed may result in a queue of stems at the inlet to the inlet channels. Such a smooth-running roll as is stated in claim 12 causes the plants to be pressed better inwardly between the teeth of the carrier disc and to slide into the channel. The strips defined in claim 13 contribute to lifting the stems onto the chute.

When the corn is harvested late in the season in a ripe state, it may happen that individual ears fall off before the plant reaches the worm and the outlet roll. To prevent a loose ear from being lost on the forwardly rotating part of the carrier disc, the corn harvester may be equipped with such a guide rail as is stated in claim 14, so that loose ears are returned to the flow of material into the machine.

Some plants fall down toward the carrier discs. A heavy ear falling down on the forwardly rotating part of a disc may easily be torn off by the teeth of the disc. This drawback may be overcome by providing the corn harvester with resilient protective plates as stated in claim 15. These plates yield to non-harvested plants which reach the disc unobstructed and are harvested in a normal manner.

The sectional division stated in claim 16 makes it easy and economical to adapt the corn harvester as required.

When shaped as stated in claim 17, the teeth of the carrier disc will affect the stems with an outward component of force.

The invention will be explained more fully below with reference to the drawing, in which

figs. 1 and 2 schematically show the essential parts of an embodiment of the corn harvester of the invention, seen from the side and from the top, respectively,

fig. 3 is a vertical section along the line III-III in fig. 2,

fig. 4 is a vertical view of a detail and shows the shape and the position of one of a plurality of head lifters, and

fig. 5 is a horizontal view on an enlarged scale showing the preferred embodiment of the teeth of the carrier disc.

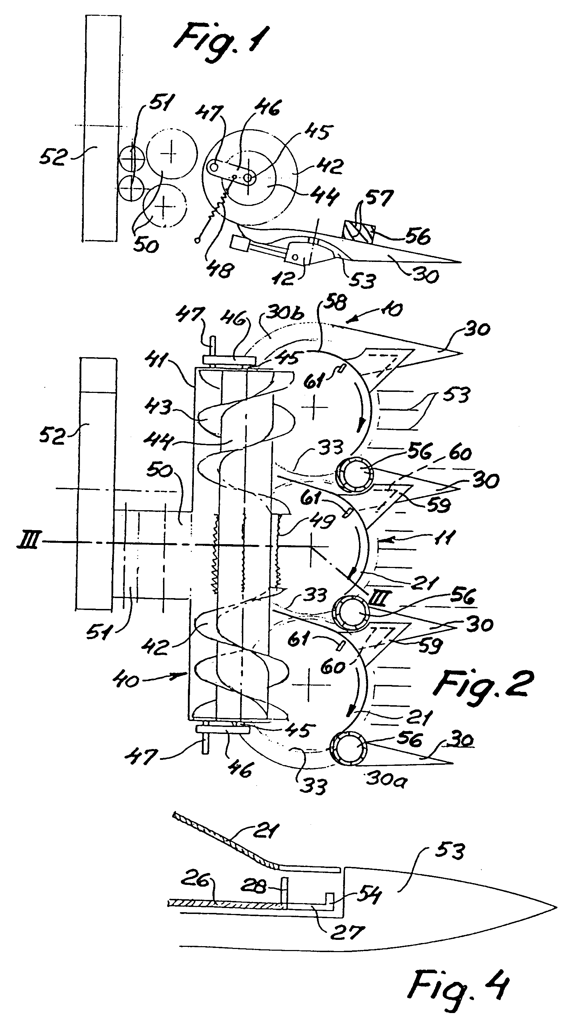

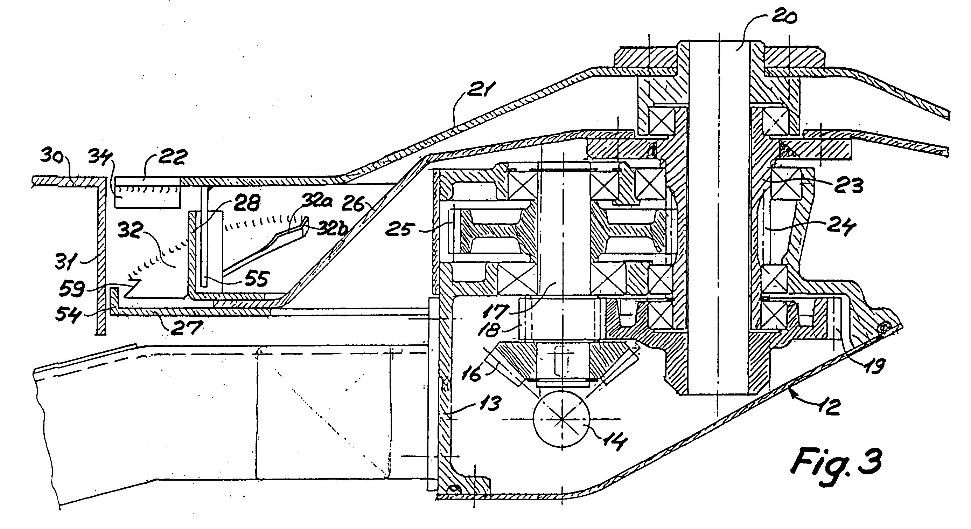

The machine shown in figs. 1 and 2 has a cutter table which is generally designated by 10 and is built of a plurality of uniform sections II. Each section has such a gearbox 12 as is shown in fig. 3. This gearbox has a housing 13 which journals a through-going main shaft 14, which can be connected with corresponding shafts in adjacents sections in a generally known manner not shown. The shaft 14 mounts a driving pinion (not shown) which meshes with another driving pinion 16 on a vertical shaft 17, which mounts another gear wheel 18 which meshes with a larger gear wheel 19 on a vertical, rotatably journalled shaft 20. The upper end of this shaft mounts a carrier disc 21 whose periphery is formed with teeth 22.

A sleeve 23 is rotatably journalled on the shaft 20, said sleeve being additionally journalled in the housing 13 and being formed with teeth 24 which mesh with a large gear wheel 25 secured to the shaft 17. This sleeve 23, which is thus driven by the main shaft 14 at a considerably greater speed than the shaft 20 and the carrier disc 21, mounts a cutter disc 26 whose periphery is provided with a plurality of substantially horizontal cutters 27, e.g. four, and substantially vertical cutters. Each vertical cutter is formed by the sharpened front edge of a curved plate 28 extending a distance along the circumference of the cutter disc 26. The plates forming the horizontal cutters 27 are each formed with a low, slightly helical edge flange 54. A finger 55 is welded to the underside of the carrier disc 21, said finger extending downwardly toward the cutter disc 26 closely spaced from the path of movement of the cutter plates 28.

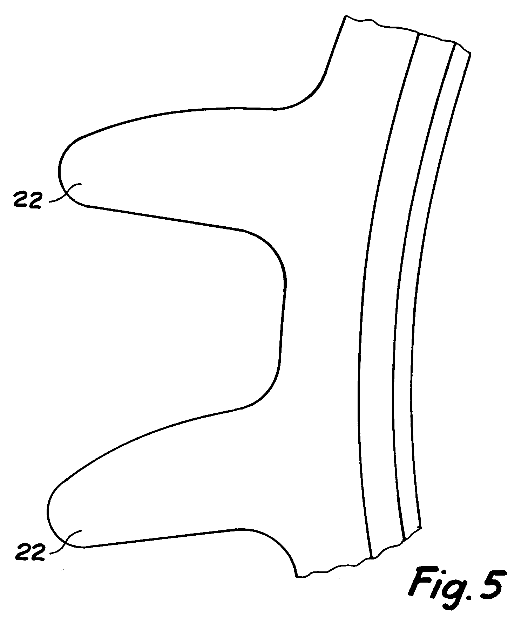

A guide section 30 is also associated with each section 11, said guide section 30 having a substantially vertical wall portion 31 along part of the periphery of the carrier disc 21. The inner side of the wall portion 31 mounts a helical chute 32, which rises rearwardly and defines, in combination with the wall portion 31 and the carrier disc teeth 22, an inlet channel 33 for the cut stem material. When the teeth has such a shape as is shown in fig. 5 with a rearwardly inclined front edge, they affect the stems with a component of force in a direction toward the outer side of the inlet channels. The front edge of the chute 32 is sharpened to form a counter cutter and is formed with a recess 59 for passage of the cutter flanges 54. A scraper 34 is provided on the underside of some of the teeth 22 to clean the upper part of the chute. The guide sections 30a and 30b at the ends of the cutter table have a somewhat different form than the central guide sections 30 owing to their special position.

The inlet channels end rearwardly in a worm conveyor 40 which has housing 41 and two worms 42 and 43 fitted on a common drum 44 with pins 45, which are suspended from arms 46 pivotable about fixed pivots 47 and urged by a spring 48 to assume a bottom position in which the worm turns almost touch the upper side of the teeth of the carrier disc at their rear region, as shown in fig. 1. Each worm conveys the cut stem material to a discharge roll 49 centrally positioned in the conveyor. In the embodiment shown, the two worms operate in the same direction of rotation and have therefore oppositely directed threads. Both worms are shown double-threaded.

The end of the chute 32 adjacent the worm conveyor is formed with an inner, upwardly extending edge flange 32a with an inclined front edge. The rear end portion of the chute has a decreasing width, the inner edge and the corresponding part 32b of the edge flange being outwardly inclined.

The discharge roll 49 is formed by axial, serrated advance strips and carries the received material in between a pair of feed rolls 50, from which the material is fed to a chopper and blower assembly 52 of ordinarily known type via a second pair of rolls 51.

At the inlet end of each inlet channel 33 on the adjacant guide section 30 and 30a there is mounted a fixed, upstanding shaft, on which a roll 56 is journalled freely rotatably, said roll having a plurality of sharp-edged helical strips 57 on the cylindrical surface.

Further, a protective screen in the form of a substantially triangular rubber plate 59 is secured to the side of the guide sections 30 and 30b which adjoins the forwardly going part of the carrier discs 21. The rubber plate 59 extends from a point adjacent the front end of the guide section obliquely downwardly and rearwardly across the front part of the forwardly going extent of the adjoining carrier disc. These rubber plates are supported by wire springs 60 and are sufficiently soft to yield to non-harvested plants, which thus reach the carrier discs unobstructedly, but are at the same time sufficiently rigid to carry falling plants with ears and thus prevent these from being torn off by the carrier disc teeth.

A low guide rail 58 is firmly mounted directly above each carrier disc, said guide rail 58 extending substantially along the periphery of the disc from the rear end part, which is secured to the frame of the machine between the carrier disc in question and the adjacent disc, to a point adjacent the inlet end of the associated inlet channel, channel 33. These guide rails serve to direct torn ears back to the inlet channels and thus prevent these from dropping out and being lost. A scraper 61, welded to the carrier disc, removes any plant residues between the disc and the guide rail.

The machine is additionally shown equipped with spear-shaped head lifters 53 projecting from a beam, which is secured to the gearbox 12, and serving to lift lying corn stems. The shape of the head lifters in a vertical plane appears from fig. 4.

During operation of the corn harvester, the standing corn stems will be gripped by the carrier disc teeth 22, helped by the rolls 56, and then be cut off close to the root by the rotating cutters 27, whose edge flange 54 keeps the stems close to the discs. The carriers move the cut stems with the root end forwardly up the chutes 32 to the worm conveyor 40, to which they arrive in a proper stream, and from where they are passed to the chopper and blower assembly 52 by the discharge roll 49 and the roll pairs 50 and 51. The vertical cutter plates 28 prevent the stems from sliding off the chute into the cutter disc.

The details of the corn harvester shown and described may be modified in many ways within the scope of the invention as defined in the claims. For example in the region immediately after the inlet channels, as seen in the direction of rotation of the discs, there may be mounted strippers to remove any attached material from the carriers and the cutters. Optionally, double carrier discs may be used, having a stripper between the discs. Another possibility is to make both the worms 42 and 43 and the discharge roll 49 independent of each other, which may thus be independently movable. The carrier discs may also optionally rotate in opposite directions. Where a worm will make an abrupt change in the direction of motion of the material, it may be desirable to make it multi-threaded.

## Claims

1. A corn harvester having a cutter table (10) extending transversely to the direction of travel and having a plurality of guide sections (30) disposed with some mutual distance, a plurality of cutter assemblies, being provided between the guide sections, each cutter assembly comprising a cutter disc (26) with cutters (27) to cut the corn stems adjacent the root and a carrier disc (21) formed with teeth (22) and defining, in combination with parts of the guide sections, inlet channels (33), as well as transport means (40) comprising one or more worms (42, 43) to convey the cut corn stems to a chopper assembly (52) **characterized** in that the shaft or shafts (45) of said one or more worms (42,43), are disposed in a plane substantially perpendicular to the rotational plane of the carrier discs (21) in the area at their rear periphery, and at a distance above the upper side of the teeth (22) which is substantially equal to the radius of the worm (42, 43).

2. A corn harvester according to claim 1, characterized in that the worm shaft or each worm shaft is suspended from pivotable arms (46), which are resiliently urged to assume a bottom position in which said distance above the upper side of the teeth (22) is equal to the radius of the worm (42, 43).

3. A corn harvester according to claim 1 or 2, **characterized** in that all the carrier discs (21) are arranged so as to be able to rotate in the same direction, and that the transport means (40) are formed by two worms (42 and 43) and an intermediate discharge roll (49), all of which being mounted on a common shaft (45), and that the two worms (42 and 43) have oppositely directed threads.

4. A corn harvester according to claim 3, **characterized** in that the two worms (42 and 43) have a different plurality of threads.

5. A corn harvester according to any of the preceeding claims, **characterized** in that in each cutter assembly the cutter disc (26) is placed below and coaxial with the carrier disc (21), means being provided for rotating the cutter disc (26) with greater speed than the carrier disc (21), a substantially helical chute (32) being disposed in each inlet channel (33) between the planes of movement of the carrier disc teeth (22) and the cutters (27).

6. A corn harvester according to claim 5, **characterized** in that the chute (32) is formed with a replaceable counter cutter at its front edge.

7. A corn harvester according to claim 5 or 6, **characterized** in that the chute (32), at its rear end partially disposed below the worm (42 or 43), is formed with an upwardly directed, inner edge flange (32), having an upwardly inclined front edge, the rear part (32b) of said chute extending obliquely outwardly.

8. A corn harvester according to claim 5, 6 or 7, **characterized** in that one or more teeth (22) of each carrier disc (21) are equipped with a scraper (34) to clean the upper part of the chute (32).

9. A corn harvester according to any of the preceding claims, **characterized** in that each cutter (27), along the outer edge, has a low, upwardly extending flange (54) having a radius slightly decreasing in a rearward direction.

10. A corn harvester according to any of the preceding claims, **characterized** in that each of said cutters (27), which are substantially horizontal, is associated with a substantially vertical cutter (28) forming the front edge of a low plate, which extends a distance along the periphery of the cutter disc (26) and defines the inner side of the inlet channel (33).

11. A corn harvester according to claim 10, **characterized** by a finger (55) disposed on the underside of the carrier disc (21) and extending downwardly toward the cutter disc (26) immediately within the path of movement of the vertical cutters (28).

12. A corn harvester according to any of the preceding claims, **characterized** in that a roll (56), freely rotatable about a vertical axis, is mounted at the inlet to each inlet channel (33), in which position the roll is capable of being contacted and rotated by corn stems being harvested immediately before they are gripped by the teeth (22) of the carrier disc (21).

13. A corn harvester according to claim 12, **characterized** in that one or more helical strips (57) are provided on the cylindrical surface of the rolls (56)

14. A corn harvester according to any of the preceeding claims, **characterized** by a curved, low guide rail (58) which is disposed above each carrier disc (21) and extends substantially along the periphery of the disc (21) from a point adjacent the rear part of its forwardly going run to a point adjacent the inlet end of the inlet channels (33).

15. A corn harvester according to any of the preceding claims, **characterized** in that a preferably spring-supported, substantially triangular rubber plate (59) is disposed above each guide section (30), said triangular plate having the forwardly directed tip disposed adjacent the front end of the guide section, from which the plate extends rearwardly across the front part of the forwardly going run of an adjoining carrier disc.

16. A corn harvester according to any of the preceding claims, **characterized** in that the cutter table (10) is built of a plurality of uniform, separable sections (11), each of which comprises a gearbox (12), a carrier disc (21), a cutter disc (26) and a guide section (30).

17. A corn harvester according to any of the preceding claims, **characterized** in that the teeth (22) of the carrier disc (21) are formed with a rearwardly inclined front edge.

**Revendications**

1. Moissonneuse de maïs comportant une table de coupe (10) s'étendant transversalement à la direction de parcours et comportant une pluralité de sections de guidage (30) disposées à une certaine distance l'une de l'autre, une pluralité de dispositifs de coupe, prévus entre les sections de guidage, chaque dispositif de coupe comprenant un disque porte-lame (26) avec des lames (27) pour couper les tiges de maïs au ras de la racine et un disque transporteur (21) formé avec des dents (22) et délimitant, en combinaison avec les parties des sections de guidage, des canaux d'entrée (33), aussi bien que des moyens de transport (40) comprenant une vis convoyeuse (42, 43) ou plus pour transporter les tiges de maïs coupées vers un dispositif de hacheuse (52), caractérisé en ce que l'axe ou les axes (45) de ladite ou desdites vis convoyeuse (42,43) sont disposés dans un plan sensiblement perpendiculaire au plan de rotation des disques convoyeurs (21) dans l'aire située au niveau de leur périphérie arrière, et à une distance au-dessus du bord supérieur des dents (22) qui est sensiblement égale au rayon de la vis convoyeuse (42,43).

2. Moissonneuse de maïs selon la revendication 1, caractérisée en ce que l'axe de la vis convoyeuse ou chaque axe de vis convoyeuse est suspendu à partir d'un bras pivotant (46), qui est poussé élastiquement pour assurer une position basse dans laquelle ladite distance au-dessus du bord supérieur des dents (22) est égale au rayon de la vis convoyeuse (42,43).

3. Moissonneuse de maïs selon la revendication 1 ou 2, caractérisé en ce que tous les disques transporteurs (21) sont disposés de manière à pouvoir tourner dans la même direction, et en ce que les moyens de transport (40) sont formés par deux vis convoyeuses (42,43) et un cylindre de déchargement intermédiaire (49), chacun d'eux étant monté sur un arbre commun (45), et en ce que les deux vis convoyeuses (42 et 43) ont des filetages dirigés de façon opposée.

4. Moissonneuse de maïs selon la revendication 3, caractérisée en ce que les deux vis convoyeuses (42 et 43) ont une pluralité différente de filetages.

5. Moissonneuse de maïs selon l'une quelconque des revendications précédentes, caractérisée en ce que, dans chaque dispositif de coupe (26), le disque porte-lame est placé au-dessous du et coaxialement au disque transporteur (21), des moyens étant prévus pour faire tourner le disque porte-lame (26) avec une vitesse plus grande que le disque transporteur (21), une glissière sensiblement hélicoïdale (32) étant disposée dans chaque canal d'entrée (33) entre les plans de déplacement des dents du disque transporteur (22) et des lames (27).

6. Moissonneuse de maïs selon la revendication 5, caractérisée en ce que la glissière (32) est formée d'une contre-lame remplaçable au niveau de son bord avant.

7. Moissonneuse de maïs selon la revendication 5 ou 6, caractérisée en ce que la glissière (32), au niveau de son extrémité arrière disposée partiellement au-dessous de la vis convoyeuse (42 ou 43), est formée avec un rebord en bordure intérieure, dirigé vers le haut (32), comportant un bord avant incliné vers le haut, la partie arrière (32b) de ladite glissière s'étendant obliquement vers l'extérieur.

8. Moissonneuse de maïs selon la revendication 5, 6 ou 7, caractérisée en ce qu'une dent ou plus (22) de chaque disque transporteur (21) est équipée d'un racloir (34) pour nettoyer la partie supérieure de la glissière (32).

9. Moissonneuse de maïs selon l'une quelconque des revendications précédentes, caractérisée en ce que chaque lame (27), le long du bord extérieur, comporte un rebord bas s'étendant vers le haut (54) ayant un rayon légèrement décroissant dans une direction arrière.

10. Moissonneuse de maïs selon l'une quelconque des revendications précédentes, caractérisée en ce que chacune desdites lames (27), qui sont sensiblement horizontales, est associée avec une lame sensiblement verticale (28) formant le bord avant d'une plaque de base, qui s'étend à une certaine distance le long de la périphérie du disque porte-lames (26) et délimite le côté intérieur du canal d'entrée (33).

11. Moissonneuse de maïs selon la revendication 10, caractérisée par un doigt (55) disposé sur la surface inférieure du disque transporteur (21) et s'étendant vers le bas vers le disque porte-lame (26) juste dans la trajectoire du mouvement des lames verticales (28).

12. Moissonneuse de maïs selon l'une quelconque des revendications précédentes, caractérisée en ce qu'un cylindre (56) pouvant tourner librement au tour d'un axe vertical, est monté au niveau de l'entrée vers chaque canal d'entrée (33), position dans laquelle le cylindre peut entrer en contact et être tourné par les tiges de maïs moissonnées immédiatement avant qu'elles ne soient saisies par les dents (22) du disque transporteur (21).

13. Moissonneuse de maïs selon la revendication 12, caractérisée en ce qu'une bande hélicoïdale ou davantage (57) est prévue sur la surface cylindrique des cylindres (56).

14. Moissonneuse de maïs selon l'une quelconque des revendications précédentes, caractérisée par un rail de guidage bas, incurvé (58) qui est disposé au-dessus de chaque disque transporteur (21) et s'étend sensiblement le long de la périphérie du disque (21) d'un point adjacent à la partie arrière de son déplacement avant à un point adjacent à l'extrémité d'entrée des canaux d'entrée (33).

15. Moissonneuse de maïs selon l'une quelconque des revendications précédentes, caractérisée en ce qu'une plaque de caoutchouc sensiblement triangulaire, de préférence supportée par ressort (59) est disposée au-dessus de chaque section de guidage (30), ladite plaque triangulaire ayant l'extrémité dirigée vers l'avant disposée à côté de l'extrémité avant de la section de guidage, à partir de laquelle la plaque s'étend vers l'arrière à travers la partie avant du déplacement avant d'un disque transporteur voisin.

16. Moissonneuse de maïs selon l'une quelconque des revendications précédentes, caractérisée en ce que la table de coupe (10) est faite d'une pluralité de sections séparables, uniformes (11), dont chacune comprend une boîte d'engrenages (12), un disque transporteur (21), un disque porte-lames (26) et une section de guidage (30).

17. Moissonneuse de maïs selon l'une quelconque des revendications précédentes, caractérisée en ce que les dents (22) du disque transporteur (21) sont formées avec un bord avant incliné vers l'arrière.

**Patentansprüche**

1. Ein Getreide-Erntegerät mit einem Schneidtisch (10), der sich quer zur Bewegungsrichtung erstreckt und mehrere führungsabschnitte (30) aufweist, die mit einem gewissen gegenseitigen Abstand angeordnet sind, mit mehreren Schneidanordnungen, die zwischen den Führungsabschnitten vorgesehen sind, wobei jede Schneidanordnung eine Schneidscheibe (26) mit Schneiden (27) zum Abschneiden der Getreidestengel nahe der Wurzel und eine Mitnehmerscheibe (21) umfaßt, die mit Zähnen (22) ausgebildet ist und in Verbindung mit Teilen der Führungsabschnitte Einlaßkanäle (33) definiert, sowie mit einer Transporteinrichtung (40), die eine oder mehrere Schnecken (42, 43) zum Transportieren der geschnittenen Getreidestengel zu einer Häckselanordnung (52) umfaßt, **dadurch gekennzeichnet, daß** Achse bzw. Welle oder Achsen bzw. Wellen (45) der einen oder mehreren Schnecken (42, 43) in einer Ebene im wesentlichen senkrecht zur Drehebene der Mitnehmerscheiben (21) im Bereich ihrer rückwärtigen Peripherie und mit einem Abstand oberhalb der Oberseite der Zähne (22) angeordnet sind, welcher im wesentlichen gleich dem Radius der Schnecke (42, 43) ist.

2. Ein Getreide-Erntegerät nach Anspruch 1, **dadurch gekennzeichnet, daß** die Schneckenachse bzw. -welle oder jede Schneckenachse bzw. -welle an schwenkbaren Armen (46) aufgehängt ist, die elastisch beaufschlagt sind, um eine untere Position einzunehmen, in der der Abstand oberhalb der Oberseite der Zähne (22) gleich dem Radius der Schnecke (42, 43) ist.

3. Ein Getreide-Erntegerät nach Anspruch 1 oder 2, **dadurch gekennzeichnet, daß** sämtliche Mitnehmerscheiben (21) so angeordnet sind, daß sie in der gleichen Richtung drehen können, und daß die Transporteinrichtung (40) von zwei Schnecken (42 und 43) und einer mittleren Abgaberolle (49) gebildet ist, die sämtlich auf einer gemeinsamen Achse bzw. Welle (45) montiert sind, und daß die zwei Schnecken (42 und 43) entgegengesetzt gerichtete Schneckengänge aufweisen.

4. Ein Getreide-Erntegerät nach Anspruch 3, **dadurch gekennzeichnet, daß** die zwei Schnecken (42 und 43) eine unterschiedliche Anzahl mehrerer Schneckengänge aufweisen.

5. Ein Getreide-Erntegerät nach wenigstens einem der vorhergehenden Ansprüche, **dadurch gekennzeichnet, daß** in jeder Schneidanordnung die Schneidscheibe (26) unterhalb der und koaxial zur Mitnehmerscheibe (21) angeordnet ist, wobei eine Einrichtung zum Drehen der Schneidscheibe (26) mit größerer Geschwindigkeit als die Mitnehmerscheibe (21) vorgesehen und eine im wesentlichen spiralige Rinne (32) in jedem Einlaßkanal (33) zwischen den Bewegungsebenen der Mitnehmerscheiben-Zähne (22) und der Schneiden (27) angeordnet ist.

6. Ein Getreide-Erntegerät nach Anspruch 5, **dadurch gekennzeichnet, daß** die Rinne (32) an ihrem vorderen Rand mit einer auswechselbaren Gegenschneide ausgebildet ist.

7. Ein Getreide-Erntegerät nach Anspruch 5 oder 6, **dadurch gekennzeichnet, daß** die an ihrem rückwärtigen Ende teilweise unterhalb der Schnecke (42 oder 43) angeordnete Rinne (32) mit einem aufwärts gerichteten inneren Randflansch (32a) mit einer aufwärts geneigten Vorderkante ausgebildet ist, wobei sich der rückwärtige Teil (32b) der Rinne schräg nach außen erstreckt.

8. Ein Getreide-Erntegerät nach Anspruch 5, 6 oder 7, **dadurch gekennzeichnet, daß** ein oder mehrere Zähne (22) jeder Mitnehmerscheibe (21) mit einem Schaber (34) zum Reinigen des oberen Teils der Rinne (32) ausgerüstet sind.

9. Ein Getreide-Erntegerät nach wenigstens einem der vorhergehenden Ansprüche, **dadurch gekennzeichnet, daß** jede Schneide (27) längs des Außenrandes einen flachen, sich aufwärts erstreckenden Schenkel (54) mit einem sich in eine rückwärtige Richtung leicht verringernden Radius aufweist.

10. Ein Getreide-Erntegerät nach wenigstens einem der vorhergehenden Ansprüche, **dadurch gekennzeichnet, daß** jede der im wesentlichen horizontalen Schneiden (27) einer im wesentlichen vertikalen Schneide (28) zugeordnet ist, die den vorderen Rand einer flachen Platte bildet, welche sich eine Strecke längs der Peripherie der Schneidscheibe (26) erstreckt und die Innenseite des Einlaßkanals (33) definiert.

11. Ein Getreide-Erntegerät nach Anspruch 10, **gekennzeichnet** durch einen Finger (55), der an der Unterseite der Mitnehmerscheibe (21) angeordnet ist und sich direkt innerhalb der Bewegungsbahn der vertikalen Schneiden (28) abwärts in Richtung der Schneidscheibe (26) erstreckt.

12. Ein Getreide-Erntegerät nach wenigstens einem der vorhergehenden Ansprüche, **dadurch gekennzeichnet, daß** eine frei um eine vertikale Achse drehbare Rolle (56) am Einlaß zu jedem Einlaßkanal (33) angeordnet ist, in welcher Position die Rolle durch geerntete Getreidestengel unmittelbar vor ihrem Ergreifen durch die Zähne (22) der Mitnehmerscheibe (21) berührt und gedreht werden kann.

13. Ein Getreide-Erntegerät nach Anspruch 12, **dadurch gekennzeichnet,** daß eine oder mehrere spiralige Rippen (51) an der zylindrischen Oberfläche der Rollen (56) vorgesehen sind.

14. Ein Getreide-Erntegerät nach wenigstens einem der vorhergehenden Ansprüche, **gekennzeichnet** durch eine gebogene flache Führungsleiste (58), die oberhalb jeder Mitnehmerscheibe (21) angeordnet ist und sich im wesentlichen entlang der Peripherie der Scheibe (21) von einer Stelle nahe dem rückwärtigen Abschnitt ihres nach vorwärts gehenden Laufs bis zu einer Stelle nahe dem Einlaßende der Einlaßkanäle (33) erstreckt.

15. Ein Getreide-Erntegerät nach wenigstens einem der vorhergehenden Ansprüche, **dadurch gekennzeichnet,** daß eine vorzugsweise federgestützte, im wesentlichen dreieckige Gummiplatte (59) oberhalb jedes Führungsabschnitts (30) angeordnet ist, wobei die nach vorne gerichtete Spitze dieser dreieckigen Platte nahe dem vorderen Ende des Führungsabschnitts angeordnet ist, von wo aus die Platte sich nach rückwärts quer über den vorderen Abschnitt des nach vorne gehenden Laufs einer anliegenden Mitnehmerscheibe erstreckt.

16. Ein Getreide-Erntegerät nach wenigstens einem der vorhergehenden Ansprüche, **dadurch gekennzeichnet,** daß der Schneidtisch (10) aus mehreren gleichförmigen trennbaren Abschnitten (11) aufgebaut ist, deren jeder ein Getriebe (12), eine Mitnehmerscheibe (21), eine Schneidscheibe (26) und einen Führungsabschnitt (30) umfaßt.

17. Ein Getreide-Erntegerät nach wenigstens einem der vorhergehenden Ansprüche, **dadurch gekennzeichnet,** daß die Zähne (22) der Mitnehmerscheibe (21) mit einer nach rückwärts schräg verlaufenden Vorderkante ausgebildet sind.

Fig. 1

Fig. 2

Fig. 4

Fig. 3

22

22

Fig.5